# EUROPEAN PATENT SPECIFICATION

(11) **EP 4 523 981 B1**
(45) Date of publication and mention of the grant of the patent: **28.10.2026**
(21) Application number: 24191931.5
(22) Date of filing: 31.07.2024
(51) Int. Cl.: B60T 7/12, B60T 7/22, B60T 8/17, B60T 8/88

(54) **WHEEL SIDE BRAKING APPARATUS AND VEHICLE**
RADSEITENBREMSVORRICHTUNG UND FAHRZEUG
APPAREIL DE FREINAGE LATÉRAL DE ROUE ET VÉHICULE

(30) Priority: 15.09.2023 CN 202311197349
(43) Date of publication of application: 19.03.2025
(73) Proprietor: Huawei Digital Power Technologies Co., Ltd., Shenzhen, 518043 (CN)
(72) Inventor: JING, Pengcheng, Shenzhen, 518043 (CN); HUANG, Chongxi, Shenzhen, 518043 (CN); NI, Hui, Shenzhen, 518043 (CN); NING, YU, Shenzhen, 518043 (CN)
(74) Representative: Isarpatent

(56) References cited:
- CN-A- 114 248 746
- DE-A1- 102008 024 180

## Description

### TECHNICAL FIELD

This application relates to the field of new energy vehicles, and more specifically, to a wheel side braking apparatus and a vehicle.

### BACKGROUND

With the development of intelligent driving technologies, a wire-controlled and integrated braking system quickly becomes a research focus in the industry because the braking system can improve driving safety of a vehicle. A wire-controlled technology is a technology that electronically controls a brake. This technology cuts off a physical connection between a pedal and a braking system, to achieve a fast response speed and high safety.

However, in the current technology, an automated driving system (automated driving system, ADS) needs to control a wheel side intelligent unit (wheel side intelligent unit, WIU) via a brake control unit (braking control unit, BCU). That is, after a brake signal is sent from the ADS, the brake signal is first transmitted to the BCU, and then the BCU transmits the brake signal to the WIU. In this process, a signal transmission link is long, resulting in a slow braking response. This affects safety of a driver and a vehicle.
CN 114 248 746 A relates to a control method for redundant control of motor vehicle brakes. The braking system comprises a hydraulic control module, a solenoid valve circuit, a parking control module, an H-bridge drive circuit, a brake pedal sensor, a brake pressure sensor and corresponding connection lines. The hydraulic control module and the parking control module are connected to the communication network of the vehicle, the solenoid valve circuit is connected to the brake assembly at the wheel side of the vehicle, and the H-bridge drive circuit is connected to the electromechanical actuator on the wheel side brake assembly. The vehicle braking system is a brake-by-wire, and the vehicle's service braking function can be controlled by the driver or by the vehicle automatic driving system.

### SUMMARY

This application provides a wheel side braking apparatus and a vehicle, to help reduce braking response time and improve safety of the vehicle.

According to a first aspect, a wheel side braking apparatus is provided. The wheel side braking apparatus is configured to directly connect to both an automated driving system and a brake control unit, the automated driving system is configured to output a first brake signal, and the brake control unit is configured to output a second brake signal. The wheel side braking apparatus brakes a vehicle in response to at least one of the first brake signal or the second brake signal.

In this embodiment of this application, the wheel side braking apparatus can directly communicate with the automated driving system, receive the brake signal sent by the automated driving system, and brake the vehicle based on the brake signal. According to this embodiment of this application, automated driving braking response time can be reduced, and safety of the vehicle can be improved.

That "the wheel side braking apparatus brakes the vehicle in response to at least one of the first brake signal or the second brake signal" may be understood as: The wheel side braking apparatus brakes the vehicle in response to the first brake signal in some time periods and brakes the vehicle in response to the second brake signal in other time periods.

In an implementation, the wheel side braking apparatus includes an actuator and an actuator controller, the actuator controller is configured to control the actuator to output braking force, the actuator controller includes a control circuit and a housing configured to accommodate the control circuit, a first bus interface and a second bus interface are disposed on a surface of the housing, and the first bus interface and the second bus interface are controlled to receive the first brake signal and the second brake signal. With reference to the first aspect, in some implementations of the first aspect, the wheel side braking apparatus includes the first bus interface, a first bus is configured to connect the automated driving system to the wheel side braking apparatus, and the first bus interface is configured to receive the first brake signal through the first bus. For example, the first bus may be a chassis controller area network (controller area network, CAN).

With reference to the first aspect, in some implementations of the first aspect, the first bus is configured to connect the brake control unit, the automated driving system, and the wheel side braking apparatus, and the first bus interface is further configured to receive the second brake signal through the first bus.

With reference to the first aspect, in some implementations of the first aspect, the wheel side braking apparatus includes the second bus interface, a second bus is configured to transmit an interaction signal between the brake control unit and the wheel side braking apparatus, the second bus interface is configured to receive the first brake signal through the second bus, and the second bus may be a braking private CAN. In this disposing manner, communication backup may be performed between the brake control unit and the wheel side braking apparatus. This meets an additional braking requirement, and improves driving safety.

With reference to the first aspect, in some implementations of the first aspect, the wheel side braking apparatus is further configured to brake the vehicle based on the first brake signal in response to an external request-on signal received from the brake control unit. In a specific implementation, the wheel side braking apparatus receives the external request-on signal of the brake control unit through the first bus interface.

That is, the external request-on signal indicates the wheel side braking apparatus to brake the vehicle in response to the first brake signal. In other words, before the wheel side braking apparatus receives the external request-on signal, the wheel side braking apparatus is prohibited from braking the vehicle in response to the first brake signal.

With reference to the first aspect, in some implementations of the first aspect, the wheel side braking apparatus is further configured to send a first response signal to the automated driving system through the first bus interface, where the first response signal indicates an actual braking execution status in which the wheel side braking apparatus brakes the vehicle based on the first brake signal. In this way, after directly sending a brake signal to the wheel side braking apparatus, the automated driving system may obtain the actual braking execution status of the wheel side braking apparatus in real time, so that the automated driving system adjusts a value of torque indicated by the brake signal or gives an alarm to a driver in time. This improves braking effect of the vehicle, and ensures driving safety.

With reference to the first aspect, in some implementations of the first aspect, the wheel side braking apparatus is further configured to send the first response signal to the brake control unit through the first bus interface or the second bus interface, where the first response signal indicates the brake control unit to stop sending the second brake signal. In this way, after braking the vehicle based on a brake signal from the automated driving system, the wheel side braking apparatus sends a response signal to the brake control unit, and the brake control unit may learn, based on the response signal, that the automated driving system has directly controlled the wheel side braking apparatus and there is no need to send a brake signal to the wheel side braking apparatus. This helps reduce communication redundancy between the brake control unit and the wheel side braking apparatus, and reduce resource overheads.

With reference to the first aspect, in some other implementations of the first aspect, the wheel side braking apparatus is further configured to brake the vehicle based on the second brake signal in response to an external request-off signal received from the brake control unit. In other words, the wheel side braking apparatus is further configured to prohibit, in response to the external request-off signal received from the brake control unit, braking the vehicle based on the first brake signal. In this way, after determining that a vehicle body is unstable or a driving mode of the vehicle changes, the brake control unit terminates communication between the wheel side braking apparatus and the automated driving system, and controls the wheel side braking apparatus to brake the vehicle. This helps improve driving safety of the vehicle.

During specific implementation, the wheel side braking apparatus receives, through the first bus interface or the second bus interface, the external request-off signal from the brake control unit.

With reference to the first aspect, in some other implementations of the first aspect, the wheel side braking apparatus is further configured to send a second response signal to the brake control unit through the first bus interface or the second bus interface, where the second response signal indicates an actual braking execution status in which the wheel side braking apparatus brakes the vehicle based on the second brake signal. In this way, it is convenient for the brake control unit to obtain the actual braking execution status in which the wheel side braking apparatus brakes the vehicle, and it is convenient for the brake control unit to adjust a value of torque indicated by a brake signal or give a warning to a driver in time. This improves braking effect of the vehicle.

With reference to the first aspect, in some other implementations of the first aspect, the wheel side braking apparatus is further configured to send a third response signal to the brake control unit, where the third response signal indicates an actual braking execution status in which the wheel side braking apparatus brakes the vehicle based on the second brake signal. The actual braking execution status includes actual braking force of the vehicle, an acceleration of the vehicle in a braking process, and a speed of the vehicle in the braking process.

With reference to the first aspect, in some other implementations of the first aspect, the wheel side braking apparatus is further configured to send a second response signal to the automated driving system through the first bus interface, where the second response signal indicates the automated driving system to stop sending the first brake signal. In this way, after braking the vehicle based on a brake signal from the brake control unit, the wheel side braking apparatus sends a response signal to the automated driving system, and the automated driving system may learn, based on the response signal, that the brake control unit has directly controlled the wheel side braking apparatus and there is no need to send a brake signal to the wheel side braking apparatus. This helps reduce communication redundancy between the automated driving system and the wheel side braking apparatus, and reduce resource overheads.

According to a second aspect, a vehicle is provided. The vehicle includes a power battery and the wheel side braking apparatus disclosed in the first aspect. The power battery is connected to an input end of the wheel side braking apparatus. The vehicle may be an electric vehicle or a hybrid vehicle. The hybrid vehicle is a vehicle that uses electric energy and liquid fuel (for example, gasoline or diesel) as energy.

With reference to the second aspect, in some implementations of the second aspect, the vehicle further includes an automated driving module. The automated driving module is configured to send an intelligent driving signal to a brake control unit through a first bus. The intelligent driving signal indicates that a driving mode of the vehicle is a first intelligent driving mode, and the first intelligent driving mode is a driving mode in which an automated driving system directly controls the wheel side braking apparatus to brake the vehicle and works normally in a braking process.

For example, the vehicle includes the wheel side braking apparatus, the automated driving system, and the brake control unit. The automated driving system is configured to send a first brake signal to the wheel side braking apparatus, where the first brake signal is used to control the wheel side braking apparatus to brake the vehicle. The brake control unit is configured to send a second brake signal to the wheel side braking apparatus, where the second brake signal is used to control the wheel side braking apparatus to brake the vehicle. The wheel side braking apparatus is configured to brake the vehicle based on an indication of either the first brake signal or the second brake signal.

In this embodiment of this application, the wheel side braking apparatus can directly communicate with the automated driving system, receive the brake signal sent by the automated driving system, and brake the vehicle based on the brake signal. According to this embodiment of this application, automated driving braking response time can be reduced, and safety of the vehicle can be improved.

A structure and a function of the wheel side braking apparatus are similar to those of the wheel side braking apparatus in any one of the first aspect and the possible implementations of the first aspect. To avoid repetition, detailed descriptions thereof are omitted herein.

In an implementation, the brake control unit is configured to: first send an external request-on signal to the wheel side braking apparatus, and then send an external request confirmation signal to the automated driving system, where the external request confirmation signal indicates the automated driving system to send the first brake signal to the wheel side braking apparatus, and the external request-on signal indicates the wheel side braking apparatus to brake the vehicle based on the first brake signal. In this way, the wheel side braking apparatus can determine, based on the external request confirmation signal, an occasion for starting braking the vehicle based on the first brake signal. This further improves practicability and security of the solution provided in this application.

In another implementation, the automated driving system is configured to send a braking request signal to the wheel side braking apparatus in response to an external request signal, where the braking request signal is used to control the wheel side braking apparatus to receive the first brake signal. The automated driving system can reliably confirm, through interaction of the braking request signal, that the wheel side braking apparatus can be controlled by the automated driving system. This can further improve practicability and security of the solution provided in this application.

In another implementation, the brake control unit is configured to stop outputting the second brake signal in response to the first brake signal sent by the automated driving system to the wheel side braking apparatus. This can avoid redundant control from the automated driving system and the brake control unit, and avoid a danger caused by a conflict between content indicated by a brake signal sent by the automated driving system and content indicated by a brake signal sent by the brake control unit.

In addition, the brake control unit is configured to: first send an external request-off signal to the automated driving system, and then send the second brake signal to the wheel side braking apparatus, where the external request-off signal indicates the automated driving system to stop sending the first brake signal to the wheel side braking apparatus. This can avoid redundant control from the automated driving system and the brake control unit, and avoid a danger caused by a conflict between content indicated by a brake signal sent by the automated driving system and content indicated by a brake signal sent by the brake control unit.

In an implementation, in a process in which the automated driving system sends the first brake signal to the wheel side braking apparatus, the brake control unit is configured to send a vehicle status signal to the automated driving system. In this way, the automated driving system can obtain the vehicle status signal, and perform control based on the vehicle status signal. This can improve control reliability and security. Specifically, the vehicle status signal includes a vehicle speed signal, a vehicle body stability signal, and the like.

### BRIEF DESCRIPTION OF DRAWINGS

FIG. 1 is a diagram of a vehicle scenario according to an embodiment of this application;
FIG. 2 is a diagram of a structure of a vehicle according to an embodiment of this application;
FIG. 3 is a diagram of a vehicle braking system according to an embodiment of this application;
FIG. 4 is a diagram of a structure of a communication connection between modules according to an embodiment of this application;
FIG. 5 is a diagram of interaction between modules according to an embodiment of this application;
FIG. 6 is a diagram of vehicle driving mode switching according to an embodiment of this application;
FIG. 7 is a diagram of interaction between modules in a manual driving mode according to an embodiment of this application;
FIG. 8 is a diagram of performing a braking operation by a vehicle in a manual driving mode according to an embodiment of this application;
FIG. 9 is a diagram of interaction between modules when a driving mode of a vehicle is switched from a manual driving mode to an intelligent handshake mode according to an embodiment of this application;
FIG. 10 is a diagram of interaction between modules when a driving mode of a vehicle is switched from an intelligent handshake mode to an intelligent driving stable fault-free mode according to an embodiment of this application;
FIG. 11 is a diagram of performing a braking operation by a vehicle in an intelligent driving stable-status fault-free mode according to an embodiment of this application;
FIG. 12 is a diagram of interaction between modules when a driving mode of a vehicle is switched from an intelligent driving stable-status fault-free mode to an intelligent driving instability fault mode according to an embodiment of this application; and
FIG. 13 is a diagram of performing a braking operation by a vehicle in an intelligent driving instability fault mode according to an embodiment of this application.

### DESCRIPTION OF EMBODIMENTS

The following describes technical solutions in embodiments of this application with reference to accompanying drawings. It is clearly that the described embodiments are some but not all of embodiments of this application. All other embodiments obtained by a person of ordinary skill in the art based on embodiments of this application without creative efforts shall fall within the protection scope of this application.

A wire-controlled solution of an automated driving system (automated driving system, ADS) may implement switching between different control statuses, to ensure safety of a driver and a vehicle. However, in the current technology, the ADS needs to control a wheel side intelligent unit (wheel side intelligent unit, WIU) via a brake control unit (braking control unit, BCU). That is, after a brake signal is sent from the ADS, the brake signal is first transmitted to the BCU, and then the BCU transmits the brake signal to the WIU. In this process, a signal transmission link is long, resulting in a slow braking response. This affects safety of the driver and the vehicle.

Based on this, this application provides a wheel side braking apparatus and a vehicle. An automated driving system may directly control the wheel side braking apparatus to brake the vehicle. This helps reduce automated driving braking response time, and improve safety of the vehicle.

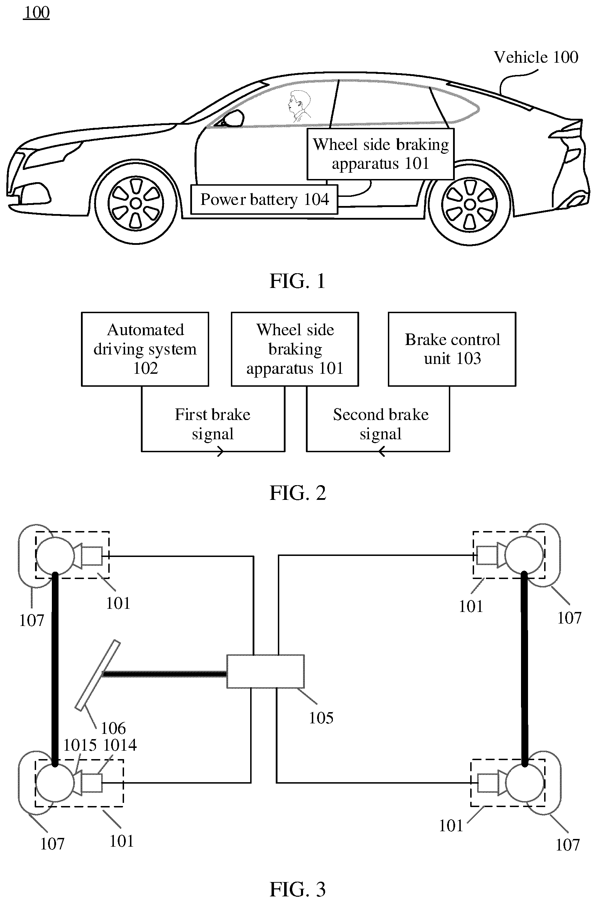

FIG. 1 is a diagram of a vehicle scenario according to an embodiment of this application. Refer to FIG. 1. A vehicle 100 includes a wheel side braking apparatus 101 and a power battery 104 connected to an input end of the wheel side braking apparatus 101, and the power battery 104 provides electric energy for the wheel side braking apparatus 101. There may be one or more wheel side braking apparatuses 101. A quantity of wheel side braking apparatuses 101 is not limited in this application.

As shown in FIG. 2, the wheel side braking apparatus 101 is directly connected to both an automated driving system 102 and a brake control unit 103. The automated driving system 102 is configured to output a first brake signal, and the brake control unit 103 is configured to output a second brake signal. The wheel side braking apparatus 101 brakes the vehicle in response to at least one of the first brake signal or the second brake signal.

In this embodiment of this application, the wheel side braking apparatus can directly communicate with the automated driving system, receive the brake signal sent by the automated driving system, and brake the vehicle based on the brake signal. According to this embodiment of this application, automated driving braking response time can be reduced, and safety of the vehicle can be improved.

FIG. 3 is a diagram of a braking system 110 according to an embodiment of this application. The braking system 110 includes a brake pedal 106, a brake control unit 105, and four wheel side braking apparatuses 101. Each wheel side braking apparatus 101 includes an actuator 1015 and an actuator controller 1014. When a driver steps down the brake pedal 106, the brake control unit 105 generates the second brake signal based on a stroke of the brake pedal 106, the four actuator controllers 1014 each send a control signal to a corresponding actuator 1015 based on an indication of the second brake signal, and the actuator 1015 outputs braking force to a wheel 107 based on an indication of the actuator controller 1014, to decrease a speed of the vehicle 100. In a braking process of the vehicle 100, a larger stroke of the brake pedal 106 indicates larger braking force indicated by a brake signal, larger braking force output by the four wheel side braking apparatuses 101, and a faster decrease in the speed of the vehicle 100. However, the actuator controller of the wheel side braking apparatus 101 provided in this embodiment of this application may not only receive the second brake signal from the brake control unit 105, but also receive the first brake signal from the automated driving system 102 to control the actuator 1015 to output braking force to the wheel 107.

In an embodiment, the actuator controller 1014 includes a housing and a control circuit, the housing is configured to accommodate the control circuit, and a first bus interface and a second bus interface are disposed on a surface of the housing. The control circuit is configured to receive the first brake signal from the automated driving system 102 through the first bus interface. The control circuit is configured to receive the second brake signal from the brake control unit 105 through the second bus interface.

In an embodiment, the braking system 110 is an electronic mechanical braking system. The actuator 1015 includes a brake motor and a brake, and the actuator controller 1014 is a brake motor controller. The brake motor controller is configured to receive the first brake signal or the second brake signal, to control the brake motor to output torque, and further drive the brake to output braking force to the wheel 107.

In an embodiment, the braking system 110 is a wire-controlled electronic hydraulic braking system. The actuator 1015 includes a brake slave cylinder and a brake, and the actuator controller 1014 is an electronic control unit. The electronic control unit is configured to receive the first brake signal or the second brake signal, to control the brake to output braking force to the wheel 107.

Specific structures and working principles of the electronic mechanical braking system and the wire-controlled electronic hydraulic braking system are not described here.

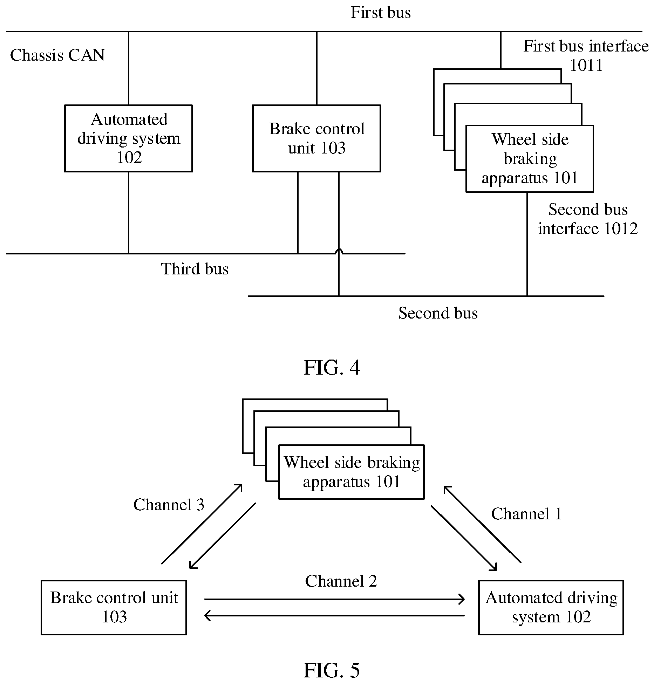

FIG. 4 is a diagram of a structure of a communication connection between modules according to an embodiment of this application.

In a specific implementation, the wheel side braking apparatus 101 includes a first bus interface 1011, a first bus is configured to connect the automated driving system 102 to the wheel side braking apparatus 101, and the first bus interface 1011 is configured to receive the first brake signal through the first bus. In an embodiment, the first bus is configured to connect the brake control unit 103, the automated driving system 102, and the wheel side braking apparatus 101, and the first bus interface 1011 is further configured to receive the second brake signal through the first bus.

For example, the first bus may be a chassis controller area network (controller area network, CAN).

In an embodiment, the wheel side braking apparatus 101 further includes a second bus interface 1012, the second bus interface 1012 is configured to connect to a second bus, the second bus is configured to transmit an interaction signal between the brake control unit 103 and the wheel side braking apparatus 101, and the second bus interface 1012 is configured to receive the first brake signal through the second bus. In this disposing manner, communication backup may be performed between the brake control unit 103 and the wheel side braking apparatus 101. This meets an additional braking requirement, and improves driving safety.

For example, the second bus may be a braking private CAN, that is, the second bus may be dedicated to connecting the brake control unit 103 to the wheel side braking apparatus 101.

In an embodiment, the automated driving system 102 is communicatively connected to the brake control unit 103 through a third bus, and the third bus is configured to transmit an interaction signal between the automated driving system 102 and the brake control unit 103. In this disposing manner, communication backup may be performed between the automated driving system 102 and the brake control unit 103. This meets a vehicle control requirement, and improves driving safety.

For example, the third bus may be an intelligent driving redundancy CAN, that is, the third bus may be dedicated to connecting the automated driving system 102 to the brake control unit 103.

FIG. 5 is a diagram of interaction between modules according to an embodiment of this application.

As shown in FIG. 4 and FIG. 5, a chassis CAN is a specific example of the first bus. The wheel side braking apparatus 101, the brake control unit 103, and the automated driving system 102 directly communicate with each other through the chassis CAN. Specifically, the wheel side braking apparatus 101 communicates with the brake control unit 103 and the automated driving system 102 via the controller in the wheel side braking apparatus 101. A channel 1, a channel 2, and a channel 3 are all channels in the chassis CAN. The wheel side braking apparatus 101 completes, through the first bus interface 1011, receiving/sending of an interaction signal with the automated driving system 102 over the channel 1 in the first bus. The wheel side braking apparatus 101 completes, through the first bus interface 1011, receiving/sending of an interaction signal with the brake control unit 103 over the channel 3 in the first bus. During specific implementation, the automated driving system 102 sends the first brake signal to the wheel side braking apparatus 101 over the channel 1, and the first brake signal includes a magnitude of braking force. After the wheel side braking apparatus 101 receives the first brake signal over the channel 1, the actuator controller 1014 in the wheel side braking apparatus 101 sends a control signal to the actuator 1015, to control the actuator 1015 to perform a braking operation. After performing the braking operation, the wheel side braking apparatus 101 sends a first response signal to the automated driving system 102 over the channel 1, where the first response signal indicates an actual braking execution status in which the wheel side braking apparatus brakes the vehicle based on the first brake signal, and the actual braking execution status of the vehicle 100 includes braking force output by the wheel side braking apparatus 101, a speed of the vehicle, an acceleration of the vehicle, a vehicle body status, and the like in a braking process of the vehicle 100.

For example, the first response signal further includes rotation angle information, actual output torque information, temperature information, and the like of a motor, so that the automated driving system 102 obtains an actual working status of the wheel side braking apparatus 101, to make a further driving decision, for example, adjust a value of torque indicated by the first brake signal or give a warning to a driver in time. This improves braking effect of the vehicle, and ensures driving safety.

In this embodiment of this application, the wheel side braking apparatus may directly communicate with the automated driving system, and receive the brake signal sent by the automated driving system, and the actuator controller in the wheel side braking apparatus may control, based on the brake signal, a magnitude of braking force output by the actuator. According to this embodiment of this application, automated driving braking response time can be reduced, and safety of the vehicle can be improved.

Still refer to FIG. 4 and FIG. 5. The automated driving system 102 and the brake control unit 103 may communicate with each other through an intelligent driving redundancy CAN, and the brake control unit 103 and the wheel side braking apparatus 101 may communicate with each other through the second bus. For example, the second bus may be a braking private CAN. In this case, the channel 2 is a channel in the intelligent driving redundancy CAN, the channel 3 is a channel in the second bus, the automated driving system 102 completes receiving/sending of an interaction signal with the brake control unit 103 over the channel 2 in the intelligent driving redundancy CAN, and the wheel side braking apparatus 101 completes, through the second bus interface 1012, receiving/sending of an interaction signal with the brake control unit 103 over the channel 3 in the second bus. In this way, when the first bus is faulty, a capability of performing backup communication between the automated driving system and the brake control unit, and between the brake control unit and the wheel side braking apparatus is retained, so that safety performance of the vehicle can be ensured.

In this embodiment of this application, the wheel side braking apparatus 101 completes receiving/sending of an interaction signal with the automated driving system 102 over the channel 1, and the channel 1 is a channel in the first bus (for example, the chassis CAN). The wheel side braking apparatus 101 completes receiving/sending of an interaction signal with the brake control unit 103 over the channel 3, and the channel 3 may be a channel in the first bus (for example, the chassis CAN), or the channel 3 may be a channel in the second bus (the braking private CAN). When the channel 3 is a channel in the first bus (for example, the chassis CAN), the wheel side braking apparatus 101 specifically completes, through the first bus interface 1011, receiving/sending of an interaction signal with the brake control unit 103 over the channel 3. When the channel 3 is a channel in the second bus (braking private CAN), the wheel side braking apparatus 101 specifically completes, through the second bus interface 1012, receiving/sending of an interaction signal with the brake control unit 103 over the channel 3. The automated driving system 102 completes receiving/sending of an interaction signal with the brake control unit 103 over the channel 2, and the channel 2 may be a channel in the first bus (for example, the chassis CAN), or the channel 2 may be a channel in the intelligent driving redundancy CAN.

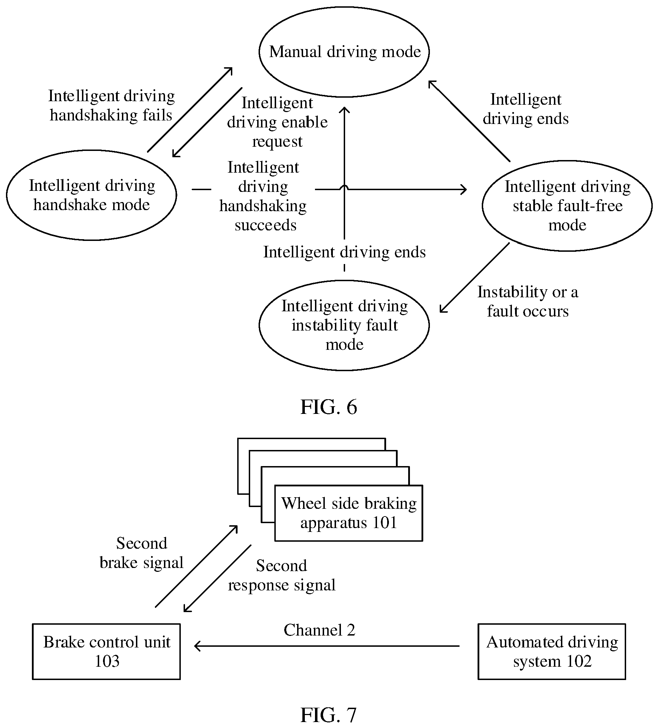

FIG. 6 is a diagram of vehicle driving mode switching according to an embodiment of this application. As shown in FIG. 6, in this embodiment of this application, driving modes of the vehicle 100 include a manual driving mode, an intelligent driving handshake mode, an intelligent driving stable fault-free mode, and an intelligent driving instability fault mode. The intelligent driving stable fault-free mode is a driving mode in which the automated driving system 102 directly controls the wheel side braking apparatus 101 to brake the vehicle 100 and works normally in a braking process. The intelligent driving instability fault mode is a driving mode in which the brake control unit 103 directly controls the wheel side braking apparatus 101 and signal interaction between the automated driving system 102 and the wheel side braking apparatus 101 is terminated.

The manual driving mode may be switched to the intelligent driving handshake mode. The intelligent driving handshake mode may be switched to the intelligent driving stable fault-free mode after an intelligent driving handshake succeeds, and may be switched to the manual driving mode after the intelligent driving handshake fails. The intelligent driving stable fault-free mode may be switched to the intelligent driving instability fault mode after a vehicle is unstable, and may be switched to the manual driving mode after intelligent driving ends.

In this embodiment of this application, the vehicle can switch between different driving modes, to meet different driving requirements of a user, and provide fun of multi-choice driving.

With reference to FIG. 7 to FIG. 13, the following describes a specific process of vehicle driving mode switching, and a signal flow for braking a vehicle by the wheel side braking apparatus 101 in different driving modes.

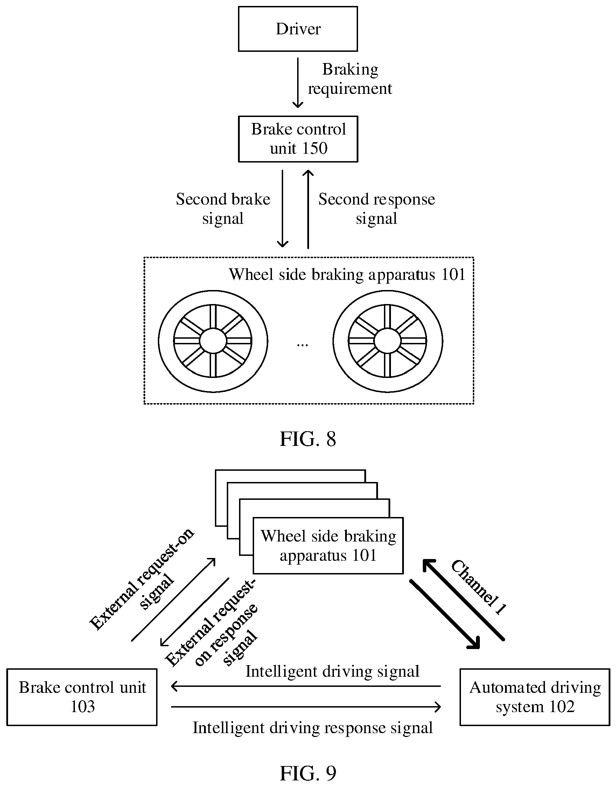

Refer to FIG. 7 and FIG. 8. FIG. 7 is a diagram of interaction between modules in a manual driving mode according to an embodiment of this application. FIG. 8 is a diagram of performing a braking operation by a vehicle in the manual driving mode according to an embodiment of this application. As shown in FIG. 7, the brake control unit 103 detects, over the channel 2 in real time, whether the automated driving system has a notification signal for enabling an intelligent driving mode, that is, the brake control unit 103 detects, in real time, whether the automated driving system 102 sends an intelligent driving request signal over the channel 2. When the brake control unit 103 continuously detects no intelligent driving request signal sent by the automated driving system 102 over the channel 2, the channel 1 between the automated driving system 102 and the wheel side braking apparatus 101 is in an off state.

Refer to FIG. 8. When the brake control unit 103 continuously detects no intelligent driving signal sent by the automated driving system 102 over the channel 2, the brake control unit 103 sends the second brake signal to the wheel side braking apparatus 101, and the wheel side braking apparatus 101 sends a second response signal to the brake control unit 103. The brake control unit 103 generates the second brake signal based on a braking requirement of a driver, and the second brake signal indicates target braking force to the wheel side braking apparatus 101. The wheel side braking apparatus 101 performs a braking operation based on the second brake signal, to provide braking force for the vehicle 100, and sends the second response signal to the brake control unit 103. The second response signal indicates actual braking force of the braking apparatus 101 to the brake control unit 103. That is, in a time period in which the intelligent driving mode is not enabled, the wheel side braking apparatus 101 brakes the vehicle in response to the second brake signal sent by the brake control unit 103.

In an embodiment, in a process in which the wheel side braking apparatus 101 brakes the vehicle 100 based on the second brake signal, the wheel side braking apparatus 101 is configured to send a third response signal to the brake control unit 103. The third response signal indicates an actual braking execution status in which the wheel side braking apparatus 101 brakes the vehicle 100 based on the second brake signal. The actual braking execution status of the vehicle 100 includes braking force output by the wheel side braking apparatus 101, a speed of the vehicle, an acceleration of the vehicle, a vehicle body status, and the like in a braking process of the vehicle 100.

For example, the second response signal further includes rotation angle information, actual output torque information, temperature information, and the like of a motor, so that the brake control unit 103 obtains an actual working status of the wheel side braking apparatus 101.

In an embodiment, the brake control unit 103 is further configured to indicate a driving mode of the vehicle 100 to the wheel side braking apparatus 101, so that the wheel side braking apparatus 101 determines a target control mode of the vehicle 100. In an example, the brake control unit 103 indicates, to the wheel side braking apparatus 101, that the vehicle 100 is in a manual driving mode, and the wheel side braking apparatus 101 determines that the target control mode of the vehicle 100 is the manual driving control mode. The second response signal further indicates an actual control mode of the wheel side braking apparatus 101 to the brake control unit 103. For example, the actual control mode of the wheel side braking apparatus 101 is a manual driving control mode. That is, in a time period in which the manual driving mode is enabled, the wheel side braking apparatus 101 brakes the vehicle in response to the second brake signal sent by the brake control unit 103.

FIG. 9 is a diagram of interaction between modules when a driving mode of a vehicle is switched from a manual driving mode to an intelligent handshake mode according to an embodiment of this application. As shown in FIG. 9, the automated driving system 102 sends an intelligent driving signal to the brake control unit 103 over the channel 2. The intelligent driving signal indicates that a driving mode of the vehicle 100 is a first intelligent driving mode, and the first intelligent driving mode is a driving mode in which the automated driving system 102 directly controls the wheel side braking apparatus 101 to brake the vehicle 100 and works normally in a braking process. In response to the intelligent driving signal, the brake control unit 103 sends an external request-on signal to the wheel side braking apparatus 101, to indicate the wheel side braking apparatus 101 to enable an external request mode. The wheel side braking apparatus 101 is configured to enable the external request mode based on the external request-on signal. After the wheel side braking apparatus 101 enables the external request mode, the channel 1 for communication is established between the wheel side braking apparatus 101 and the automated driving system 102. The wheel side braking apparatus 101 is further configured to send an external request-on response signal to the brake control unit 103 to indicate, to the brake control unit 103, that the wheel side braking apparatus 101 has enabled the external request mode. That is, in a time period in which the first intelligent driving mode is enabled, the wheel side braking apparatus 101 brakes the vehicle in response to the second brake signal sent by the automated driving system 102.

In this embodiment of this application, after receiving the external request-on response signal from the wheel side braking apparatus 101, the brake control unit 103 may further detect a stable status of the vehicle 100.

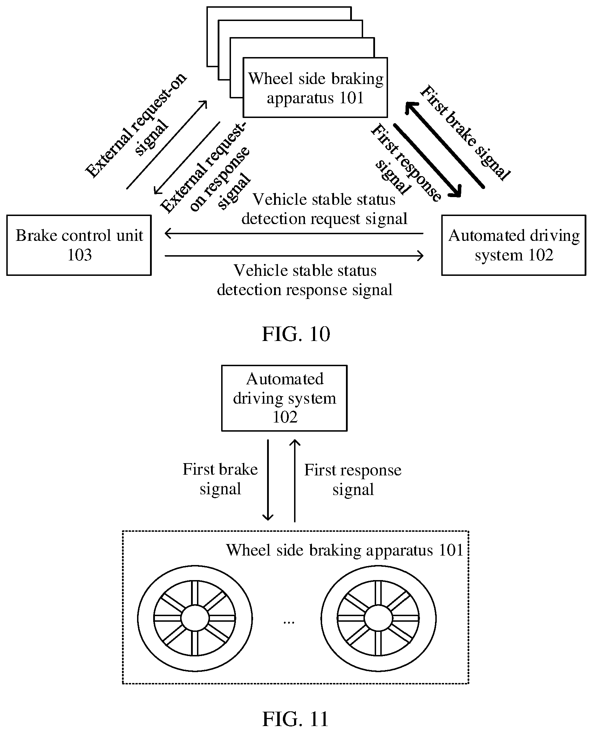

Refer to FIG. 10 and FIG. 11. FIG. 10 is a diagram of interaction between modules when a driving mode of a vehicle is switched from an intelligent handshake mode to an intelligent driving stable-status fault-free mode according to an embodiment of this application. FIG. 11 is a diagram of performing a braking operation by the vehicle in the intelligent driving stable-status fault-free mode according to an embodiment of this application. The automated driving system 102 sends a vehicle stable status detection request signal to the brake control unit 103 over the channel 2, to trigger the brake control unit 103 to detect a vehicle body stable status of the vehicle 100. After detecting the vehicle body stable status of the vehicle 100 and obtaining a detection result, the brake control unit 103 sends a vehicle stable status detection response signal to the automated driving system 102 over the channel 2, to indicate, to the automated driving system 102, the detection result of the vehicle body stable status of the vehicle 100. When the vehicle stable status detection response signal sent by the brake control unit 103 to the automated driving system 102 indicates that the vehicle 100 is in a stable-status fault-free driving mode, the vehicle 100 completes switching from the intelligent handshake mode to the intelligent driving stable-status fault-free mode.

In this case, the brake control unit 103 continuously sends an external request-on signal to the wheel side braking apparatus 101, to indicate the wheel side braking apparatus 101 to continuously enable an external request mode. As shown in FIG. 11, when the vehicle 100 is in the first intelligent driving mode, the automated driving system 102 directly sends the first brake signal to the wheel side braking apparatus 101 over the channel 1, and the wheel side braking apparatus 101 brakes the vehicle 100 based on the first brake signal. The wheel side braking apparatus 101 may further send the first response signal to the automated driving system 102 over the channel 1. The first brake signal indicates target braking force to the wheel side braking apparatus 101, and the first response signal indicates actual braking force of the wheel side braking apparatus 101 to the brake control unit 103.

In an embodiment, the automated driving system 102 is further configured to indicate a driving mode of the vehicle to the wheel side braking apparatus 101, so that the wheel side braking apparatus 101 determines a target control mode of the vehicle. In an example, the automated driving system 102 indicates, to the wheel side braking apparatus 101, that the vehicle 100 is in the first intelligent driving mode, and the wheel side braking apparatus 101 determines that the target control mode of the vehicle 100 is the intelligent driving stable fault-free mode. The first response signal further indicates an actual control mode of the wheel side braking apparatus 101 to the brake control unit 103. For example, the actual control mode of the wheel side braking apparatus 101 is the intelligent driving stable fault-free mode.

Still refer to FIG. 10. Before or after sending the first response signal to the automated driving system 102 over the channel 1, the wheel side braking apparatus 101 may further send an external request-on response signal to the brake control unit 103 over the channel 3. The external request-on response signal indicates to the brake control unit 103 that the wheel side braking apparatus 101 has enabled the external request mode. In an embodiment, the wheel side braking apparatus 101 may further send the foregoing first response signal to the brake control unit 103, so that the brake control unit 103 obtains a real-time execution status of the wheel side braking apparatus 101.

It should be noted that the brake control unit 103 may first send the external request-on signal to the wheel side braking apparatus 101, and then send an external request confirmation signal to the automated driving system 102, so that after the wheel side braking apparatus 101 is ready to receive a signal from the automated driving system 102, the automated driving system 102 sends the first brake signal. This can avoid that the wheel side braking apparatus 101 cannot perform processing indicated by the first brake signal because the wheel side braking apparatus 101 is not ready to receive the signal from the automated driving system 102.

In addition, when the automated driving system 102 directly controls (that is, controls based on the first brake signal) the wheel side braking apparatus 101, the brake control unit 103 may be enabled to stop sending the second brake signal. This avoids a redundant operation, and avoids an error and a danger that are caused by different operation content indicated by the first brake signal and the second brake signal.

Moreover, the brake control unit 103 may first send an external request-off signal to the automated driving system 102, and then send the second brake signal to the wheel side braking apparatus 101. This can prevent the automated driving system 102 and the brake control unit 103 from simultaneously sending a brake signal to the wheel side braking apparatus 101, avoid a redundant operation, and avoid the error and the danger that are caused by different operation content indicated by the first brake signal and the second brake signal.

In this embodiment of this application, information indicated by the first brake signal is the same as or different from information indicated by the second brake signal. That is, the first brake signal is the same as or different from the second brake signal. Correspondingly, information indicated by the first response signal is the same as or different from information indicated by the second response signal. That is, the first response signal is the same as or different from the second response signal.

In this embodiment of this application, the wheel side braking apparatus can directly communicate with the automated driving system, receive the brake signal sent by the automated driving system, and brake the vehicle based on the brake signal. According to this embodiment of this application, automated driving braking response time can be reduced, and safety of the vehicle can be improved.

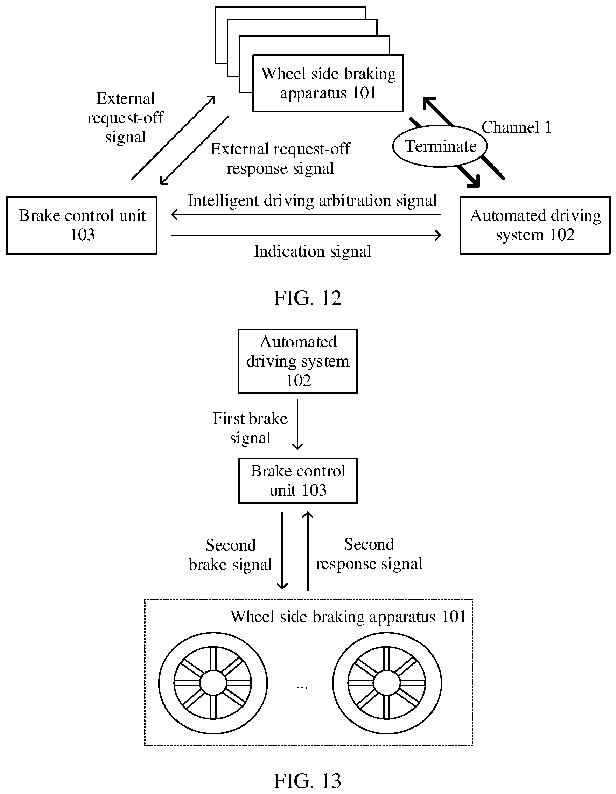

Refer to FIG. 12 and FIG. 13. FIG. 12 is a diagram of interaction between modules when a driving mode of a vehicle is switched from an intelligent driving stable-status fault-free mode to an intelligent driving instability fault mode according to an embodiment of this application. FIG. 13 is a diagram of performing a braking operation by the vehicle in the intelligent driving instability fault mode according to an embodiment of this application. As shown in FIG. 12, the brake control unit 103 continuously detects a stable status of the vehicle 100. After detecting that the vehicle 100 is unstable, the brake control unit 103 sends an indication signal to the automated driving system 102, to indicate, to the automated driving system 102, that the vehicle 100 is in the intelligent driving instability fault mode. In an embodiment, a fault indication signal further indicates the automated driving system 102 to terminate communication with the wheel side braking apparatus 101, that is, to close the channel 2. The brake control unit 103 further sends an external request-off signal to the wheel side braking apparatus 101, to indicate the wheel side braking apparatus 101 to disable an external request mode. The wheel side braking apparatus 101 disables the external request mode based on the external request-off signal, and sends an external request-off response signal to the brake control unit 103 to indicate, to the brake control unit 103, that the wheel side braking apparatus 101 has disabled the external request mode. As shown in FIG. 13, when the vehicle is in the intelligent driving instability fault mode, the brake control unit 103 is further configured to send the second brake signal to the wheel side braking apparatus 101, and the wheel side braking apparatus 101 performs a braking operation based on the second brake signal, to provide braking force for the vehicle, and sends the second response signal to the brake control unit 103. The second brake signal indicates actual braking force of the wheel side braking apparatus 101 to the brake control unit 103.

Still refer to FIG. 12 and FIG. 13. In an embodiment, the automated driving system 102 may further send an intelligent driving arbitration signal to the brake control unit 103, where the intelligent driving arbitration signal includes the first brake signal sent by the automated driving system 102 to the wheel side braking apparatus 101, and the brake control unit 103 determines the second brake signal based on the first brake signal and a real-time status of the vehicle 100, and sends the second brake signal to the wheel side braking apparatus 101. The wheel side braking apparatus 101 performs a braking operation based on the second brake signal, to provide braking force for the vehicle, and sends the second response signal to the brake control unit 103. In this embodiment of this application, information indicated by the second brake signal is the same as or different from information indicated by the first brake signal. This is not limited in this application.

During specific implementation, for a specific process in which the wheel side braking apparatus 101 brakes the vehicle 100 based on the second brake signal, refer to a specific process in which the wheel side braking apparatus 101 brakes the vehicle 100 based on the first brake signal. Details are not described herein again.

In this embodiment of this application, in response to vehicle driving mode switching from the intelligent driving stable fault-free mode to the intelligent driving instability fault mode, the brake control unit may indicate to terminate communication between the automated driving system and the wheel side braking apparatus, and the brake control unit controls the wheel side braking apparatus to provide braking force for the vehicle, to ensure safety of a driver and the vehicle.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The protection scope of this application shall be subject to the protection scope of the claims.

## Claims

1. A wheel side braking apparatus (101), wherein the wheel side braking apparatus (101) is configured to directly connect to both an automated driving system (102) and a brake control unit (103), the automated driving system (102) is configured to output a first brake signal, and the brake control unit (103) is configured to output a second brake signal; and
the wheel side braking apparatus (101) brakes a vehicle (100) in response to at least one of the first brake signal or the second brake signal,
wherein the wheel side braking apparatus (101) is further configured to:
send a first response signal to the automated driving system (102), wherein the first response signal indicates an actual braking execution status in which the wheel side braking apparatus (101) brakes the vehicle (100) based on the first brake signal.

2. The wheel side braking apparatus (101) according to claim 1, wherein the wheel side braking apparatus (101) is further configured to:
brake the vehicle (100) based on the first brake signal in response to an external request-on signal received from the brake control unit (103).

3. The wheel side braking apparatus (101) according to claim 1, wherein the wheel side braking apparatus (101) is further configured to:
send a second response signal to the brake control unit (103), wherein the second response signal indicates the brake control unit (103) to stop sending the second brake signal.

4. The wheel side braking apparatus (101) according to claim 1, wherein the wheel side braking apparatus (101) is further configured to:
stop braking the vehicle (100) based on the first brake signal in response to an external request-off signal received from the brake control unit (103); or
brake the vehicle (100) based on the second brake signal in response to an external request-off signal received from the brake control unit (103).

5. The wheel side braking apparatus (101) according to claim 1, wherein the wheel side braking apparatus (101) is further configured to:
send a third response signal to the brake control unit (103), wherein the third response signal indicates an actual braking execution status in which the wheel side braking apparatus (101) brakes the vehicle (100) based on the second brake signal.

6. The wheel side braking apparatus (101) according to any one of claims 1 to 5, wherein the wheel side braking apparatus (101) comprises a first bus interface (1011), a first bus is configured to connect the automated driving system (102) to the wheel side braking apparatus (101), and the first bus interface (1011) is configured to receive the first brake signal through the first bus.

7. The wheel side braking apparatus (101) according to claim 6, wherein the first bus is configured to connect the brake control unit (103), the automated driving system (102), and the wheel side braking apparatus (101), and the first bus interface (1011) is further configured to receive the second brake signal through the first bus.

8. The wheel side braking apparatus (101) according to any one of claims 1 to 5, wherein the wheel side braking apparatus (101) comprises a second bus interface (1012), a second bus is configured to connect the brake control unit (103) to the wheel side braking apparatus (101), and the second bus interface (1012) is configured to receive the second brake signal through the second bus.

9. The wheel side braking apparatus (101) according to any one of claims 1 to 8, wherein the wheel side braking apparatus (101) comprises an actuator (1015) and an actuator controller (1014), the actuator controller (1014) is configured to control the actuator (1015) to output braking force, the actuator controller (1014) comprises a control circuit and a housing configured to accommodate the control circuit, the first bus interface (1011) and the second bus interface (1012) are disposed on a surface of the housing, and the first bus interface (1011) and the second bus interface (1012) are controlled to receive the first brake signal and the second brake signal.

10. A vehicle (100), wherein the vehicle (100) comprises the wheel side braking apparatus (101) according to any one of claims 1 to 8, an automated driving system (102), and a brake control unit (103);
the automated driving system (102) is configured to send a first brake signal to the wheel side braking apparatus (101), wherein the first brake signal is used to control the wheel side braking apparatus (101) to brake the vehicle (100);
the brake control unit (103) is configured to send a second brake signal to the wheel side braking apparatus (101), wherein the second brake signal is used to control the wheel side braking apparatus (101) to brake the vehicle (100); and
the wheel side braking apparatus (101) is configured to brake the vehicle (100) based on an indication of either the first brake signal or the second brake signal.

11. The vehicle (100) according to claim 10, wherein the brake control unit (103) is configured to:
send an external request-on signal to the wheel side braking apparatus (101), and send an external request confirmation signal to the automated driving system (102), wherein the external request confirmation signal indicates the automated driving system (102) to send the first brake signal to the wheel side braking apparatus (101), and the external request-on signal indicates the wheel side braking apparatus (101) to brake the vehicle (100) based on the first brake signal.

12. The vehicle (100) according to claim 11, wherein the automated driving system (102) is configured to:
send a braking request signal to the wheel side braking apparatus (101) in response to the external request-on signal, wherein the braking request signal is used to control the wheel side braking apparatus (101) to receive the first brake signal.

13. The vehicle (100) according to any one of claims 10 to 12, wherein the brake control unit (103) is configured to:
stop outputting the second brake signal in response to the first brake signal sent by the automated driving system (102) to the wheel side braking apparatus (101).

14. The vehicle (100) according to claim 10, wherein the wheel side braking apparatus (101) is configured to receive the first brake signal through a first bus, and the wheel side braking apparatus (101) is configured to receive the second brake signal through a second bus, wherein the brake control unit (103) is configured to:
send an external request-off signal to the automated driving system (102), and send the second brake signal to the wheel side braking apparatus (101), wherein the external request-off signal indicates the automated driving system (102) to stop sending the first brake signal to the wheel side braking apparatus (101).
wherein in a process in which the automated driving system (102) sends the first brake signal to the wheel side braking apparatus (101), the brake control unit (103) is configured to send a vehicle status signal to the automated driving system (102).

## Patentansprüche

1. Radseitige Bremsvorrichtung (101), wobei die radseitige Bremsvorrichtung (101) dazu konfiguriert ist, sich sowohl mit einem automatisierten Fahrsystem (102) als auch mit einer Bremssteuereinheit (103) direkt zu verbinden, das automatisierte Fahrsystem (102) dazu konfiguriert ist, ein erstes Bremssignal auszugeben, und die Bremssteuereinheit (103) dazu konfiguriert ist, ein zweites Bremssignal auszugeben; und
die radseitige Bremsvorrichtung (101) ein Fahrzeug (100) als Reaktion auf mindestens eines aus dem ersten Bremssignal oder dem zweiten Bremssignal bremst,
wobei die radseitige Bremsvorrichtung (101) ferner zu Folgendem konfiguriert ist:
Senden eines ersten Antwortsignals an das automatisierte Fahrsystem (102), wobei das erste Antwortsignal einen tatsächlichen Bremsvorgangsstatus angibt, bei dem die radseitige Bremsvorrichtung (101) das Fahrzeug (100) basierend auf dem ersten Bremssignal bremst.

2. Radseitige Bremsvorrichtung (101) nach Anspruch 1, wobei die radseitige Bremsvorrichtung (101) ferner zu Folgendem konfiguriert ist:
Bremsen des Fahrzeugs (100) basierend auf dem ersten Bremssignal als Reaktion auf ein externes Ein-Anforderungssignal, das von der Bremssteuereinheit (103) empfangen wird.

3. Radseitige Bremsvorrichtung (101) nach Anspruch 1, wobei die radseitige Bremsvorrichtung (101) ferner zu Folgendem konfiguriert ist:
Senden eines zweiten Antwortsignals an die Bremssteuereinheit (103), wobei das zweite Antwortsignal der Bremssteuereinheit (103) angibt, Senden des zweiten Bremssignals zu beenden.

4. Radseitige Bremsvorrichtung (101) nach Anspruch 1, wobei die radseitige Bremsvorrichtung (101) ferner zu Folgendem konfiguriert ist:
Beenden von Bremsen des Fahrzeugs (100) basierend auf dem ersten Bremssignal als Reaktion auf ein externes Aus-Anforderungssignal, das von der Bremssteuereinheit (103) empfangen wird; oder
Bremsen des Fahrzeugs (100) basierend auf dem zweiten Bremssignal als Reaktion auf ein externes Aus-Anforderungssignal, das von der Bremssteuereinheit (103) empfangen wird.

5. Radseitige Bremsvorrichtung (101) nach Anspruch 1, wobei die radseitige Bremsvorrichtung (101) ferner zu Folgendem konfiguriert ist:
Senden eines dritten Antwortsignals an die Bremssteuereinheit (103), wobei das dritte Antwortsignal einen tatsächlichen Bremsvorgangsstatus angibt, bei dem die radseitige Bremsvorrichtung (101) das Fahrzeug (100) basierend auf dem zweiten Bremssignal bremst.

6. Radseitige Bremsvorrichtung (101) nach einem der Ansprüche 1 bis 5, wobei die radseitige Bremsvorrichtung (101) eine erste Busschnittstelle (1011) umfasst, ein erster Bus dazu konfiguriert ist, das automatisierte Fahrsystem (102) mit der radseitigen Bremsvorrichtung (101) zu verbinden, und die erste Busschnittstelle (1011) dazu konfiguriert ist, das erste Bremssignal über den ersten Bus zu empfangen.

7. Radseitige Bremsvorrichtung (101) nach Anspruch 6, wobei der erste Bus dazu konfiguriert ist, die Bremssteuereinheit (103), das automatisierte Fahrsystem (102) und die radseitige Bremsvorrichtung (101) zu verbinden, und die erste Busschnittstelle (1011) ferner dazu konfiguriert ist, das zweite Bremssignal über den ersten Bus zu empfangen.

8. Radseitige Bremsvorrichtung (101) nach einem der Ansprüche 1 bis 5, wobei die radseitige Bremsvorrichtung (101) eine zweite Busschnittstelle (1012) umfasst, ein zweiter Bus dazu konfiguriert ist, die Bremssteuereinheit (103) mit der radseitigen Bremsvorrichtung (101) zu verbinden, und die zweite Busschnittstelle (1012) dazu konfiguriert ist, das zweite Bremssignal über den zweiten Bus zu empfangen.

9. Radseitige Bremsvorrichtung (101) nach einem der Ansprüche 1 bis 8, wobei die radseitige Bremsvorrichtung (101) einen Aktor (1015) und eine Aktorsteuerung (1014) umfasst, die Aktorsteuerung (1014) dazu konfiguriert ist, den Aktor (1015) so zu steuern, dass er eine Bremskraft ausgibt, die Aktorsteuerung (1014) eine Steuerschaltung und ein Gehäuse, das dazu konfiguriert ist, die Steuerschaltung aufzunehmen, umfasst, die erste Busschnittstelle (1011) und die zweite Busschnittstelle (1012) auf einer Oberfläche des Gehäuses angeordnet sind und die erste Busschnittstelle (1011) und die zweite Busschnittstelle (1012) so gesteuert werden, dass sie das erste Bremssignal und das zweite Bremssignal empfangen.

10. Fahrzeug (100), wobei das Fahrzeug (100) die radseitige Bremsvorrichtung (101) nach einem der Ansprüche 1 bis 8, ein automatisiertes Fahrsystem (102) und eine Bremssteuereinheit (103) umfasst;
das automatisierte Fahrsystem (102) dazu konfiguriert ist, ein erstes Bremssignal an die radseitige Bremsvorrichtung (101) zu senden, wobei das erste Bremssignal dazu verwendet wird, die radseitige Bremsvorrichtung (101) so zu steuern, dass sie das Fahrzeug (100) bremst;
die Bremssteuereinheit (103) dazu konfiguriert ist, ein zweites Bremssignal an die radseitige Bremsvorrichtung (101) zu senden, wobei das zweite Bremssignal dazu verwendet wird, die radseitige Bremsvorrichtung (101) so zu steuern, dass sie das Fahrzeug (100) bremst; und
die radseitige Bremsvorrichtung (101) dazu konfiguriert ist, das Fahrzeug (100) basierend auf einer Angabe entweder des ersten Bremssignals oder des zweiten Bremssignals zu bremsen.

11. Fahrzeug (100) nach Anspruch 10, wobei die Bremssteuereinheit (103) zu Folgendem konfiguriert ist:
Senden eines externen Ein-Anforderungssignals an die radseitige Bremsvorrichtung (101) und Senden eines externen Anforderungsbestätigungssignals an das automatisierte Fahrsystem (102), wobei das externe Anforderungsbestätigungssignal dem automatisierten Fahrsystem (102) angibt, das erste Bremssignal an die radseitige Bremsvorrichtung (101) zu senden, und das externe Ein-Anforderungssignal der radseitigen Bremsvorrichtung (101) angibt, das Fahrzeug (100) basierend auf dem ersten Bremssignal zu bremsen.

12. Fahrzeug (100) nach Anspruch 11, wobei das automatisierte Fahrsystem (102) zu Folgendem konfiguriert ist:
Senden eines Bremsanforderungssignals an die radseitige Bremsvorrichtung (101) als Reaktion auf das externe Ein-Anforderungssignal, wobei das Bremsanforderungssignal dazu verwendet wird, die radseitige Bremsvorrichtung (101) so zu steuern, dass sie das erste Bremssignal empfängt.

13. Fahrzeug (100) nach einem der Ansprüche 10 bis 12, wobei die Bremssteuereinheit (103) zu Folgendem konfiguriert ist:
Beenden von Ausgeben des zweiten Bremssignals als Reaktion auf das erste Bremssignal, das durch das automatisierte Fahrsystem (102) an die radseitige Bremsvorrichtung (101) gesendet wird.

14. Fahrzeug (100) nach Anspruch 10, wobei die radseitige Bremsvorrichtung (101) dazu konfiguriert ist, das erste Bremssignal über einen ersten Bus zu empfangen, und die radseitige Bremsvorrichtung (101) dazu konfiguriert ist, das zweite Bremssignal über einen zweiten Bus zu empfangen, wobei die Bremssteuereinheit (103) zu Folgendem konfiguriert ist:
Senden eines externen Aus-Anforderungssignals an das automatisierte Fahrsystem (102) und Senden des zweiten Bremssignals an die radseitige Bremsvorrichtung (101), wobei das externe Aus-Anforderungssignal dem automatisierten Fahrsystem (102) angibt, das Senden des ersten Bremssignals an die radseitige Bremsvorrichtung (101) zu beenden.
wobei in einem Prozess, in dem das automatisierte Fahrsystem (102) das erste Bremssignal an die radseitige Bremsvorrichtung (101) sendet, die Bremssteuereinheit (103) dazu konfiguriert ist, ein Fahrzeugstatussignal an das automatisierte Fahrsystem (102) zu senden.

## Revendications

1. Appareil de freinage latéral de roue (101), dans lequel l'appareil de freinage latéral de roue (101) est configuré pour se relier directement à la fois à un système de conduite automatisée (102) et à une unité de commande de frein (103), le système de conduite automatisée (102) étant configuré pour émettre un premier signal de frein, et l'unité de commande de frein (103) étant configurée pour émettre un second signal de frein ; et
l'appareil de freinage latéral de roue (101) freine un véhicule (100) en réponse à au moins l'un du premier signal de frein ou du second signal de frein,
dans lequel l'appareil de freinage latéral de roue (101) est en outre configuré pour :
envoyer un premier signal de réponse au système de conduite automatisée (102), dans lequel le premier signal de réponse indique un état d'exécution de freinage réel dans lequel l'appareil de freinage latéral de roue (101) freine le véhicule (100) sur la base du premier signal de frein.

2. Appareil de freinage latéral de roue (101) selon la revendication 1, dans lequel l'appareil de freinage latéral de roue (101) est en outre configuré pour :
freiner le véhicule (100) sur la base du premier signal de frein en réponse à un signal de demande d'activation externe reçu de l'unité de commande de frein (103).

3. Appareil de freinage latéral de roue (101) selon la revendication 1, dans lequel l'appareil de freinage latéral de roue (101) est en outre configuré pour :
envoyer un deuxième signal de réponse à l'unité de commande de frein (103), dans lequel le deuxième signal de réponse indique à l'unité de commande de frein (103) d'arrêter d'envoyer le second signal de frein.

4. Appareil de freinage latéral de roue (101) selon la revendication 1, dans lequel l'appareil de freinage latéral de roue (101) est en outre configuré pour :
arrêter de freiner le véhicule (100) sur la base du premier signal de frein en réponse à un signal de demande de désactivation externe reçu de l'unité de commande de frein (103) ; ou
freiner le véhicule (100) sur la base du second signal de frein en réponse à un signal de demande de désactivation externe reçu de l'unité de commande de frein (103).

5. Appareil de freinage latéral de roue (101) selon la revendication 1, dans lequel l'appareil de freinage latéral de roue (101) est en outre configuré pour :
envoyer un troisième signal de réponse à l'unité de commande de frein (103), dans lequel le troisième signal de réponse indique un état d'exécution de freinage réel dans lequel l'appareil de freinage latéral de roue (101) freine le véhicule (100) sur la base du second signal de frein.

6. Appareil de freinage latéral de roue (101) selon l'une quelconque des revendications 1 à 5, dans lequel l'appareil de freinage latéral de roue (101) comprend une première interface de bus (1011), un premier bus est configuré pour relier le système de conduite automatisée (102) à l'appareil de freinage latéral de roue (101), et la première interface de bus (1011) est configurée pour recevoir le premier signal de frein par l'intermédiaire du premier bus.

7. Appareil de freinage latéral de roue (101) selon la revendication 6, dans lequel le premier bus est configuré pour relier l'unité de commande de frein (103), le système de conduite automatisée (102) et l'appareil de freinage latéral de roue (101), et la première interface de bus (1011) est en outre configurée pour recevoir le second signal de frein par l'intermédiaire du premier bus.

8. Appareil de freinage latéral de roue (101) selon l'une quelconque des revendications 1 à 5, dans lequel l'appareil de freinage latéral de roue (101) comprend une seconde interface de bus (1012), un second bus est configuré pour relier l'unité de commande de frein (103) à l'appareil de freinage latéral de roue (101), et la seconde interface de bus (1012) est configurée pour recevoir le second signal de frein par l'intermédiaire du second bus.

9. Appareil de freinage latéral de roue (101) selon l'une quelconque des revendications 1 à 8, dans lequel l'appareil de freinage latéral de roue (101) comprend un actionneur (1015) et un dispositif de commande d'actionneur (1014), le dispositif de commande d'actionneur (1014) étant configuré pour commander l'actionneur (1015) afin d'émettre une force de freinage, le dispositif de commande d'actionneur (1014) comprend un circuit de commande et un boîtier configuré pour accueillir le circuit de commande, la première interface de bus (1011) et la seconde interface de bus (1012) sont disposées sur une surface du boîtier, et la première interface de bus (1011) et la seconde interface de bus (1012) sont commandées pour recevoir le premier signal de frein et le second signal de frein.

10. Véhicule (100), dans lequel le véhicule (100) comprend l'appareil de freinage latéral de roue (101) selon l'une quelconque des revendications 1 à 8, un système de conduite automatisés (102) et une unité de commande de frein (103) ;
le système de conduite automatisée (102) est configuré pour envoyer un premier signal de frein à l'appareil de freinage latéral de roue (101), dans lequel le premier signal de frein est utilisé pour commander l'appareil de freinage latéral de roue (101) pour freiner le véhicule (100) ;
l'unité de commande de frein (103) est configurée pour envoyer un second signal de frein à l'appareil de freinage latéral de roue (101), dans lequel le second signal de frein est utilisé pour commander l'appareil de freinage latéral de roue (101) pour freiner le véhicule (100) ; et
l'appareil de freinage latéral de roue (101) est configuré pour freiner le véhicule (100) sur la base d'une indication soit du premier signal de frein soit du second signal de frein.

11. Véhicule (100) selon la revendication 10, dans lequel l'unité de commande de frein (103) est configurée pour :
envoyer un signal de demande d'activation externe à l'appareil de freinage latéral de roue (101) et envoyer un signal de confirmation de demande externe au système de conduite automatisée (102), dans lequel le signal de confirmation de demande externe indique au système de conduite automatisée (102) d'envoyer le premier signal de frein à l'appareil de freinage latéral de roue (101), et le signal de demande d'activation externe indique à l'appareil de freinage latéral de roue (101) de freiner le véhicule (100) sur la base du premier signal de frein.

12. Véhicule (100) selon la revendication 11, dans lequel le système de conduite automatisée (102) est configuré pour :
envoyer un signal de demande de freinage à l'appareil de freinage latéral de roue (101) en réponse au signal de demande d'activation externe, dans lequel le signal de demande de freinage est utilisé pour commander l'appareil de freinage latéral de roue (101) de recevoir le premier signal de frein.

13. Véhicule (100) selon l'une quelconque des revendications 10 à 12, dans lequel l'unité de commande de frein (103) est configurée pour :
arrêter d'émettre le second signal de frein en réponse au premier signal de frein envoyé par le système de conduite automatisée (102) à l'appareil de freinage latéral de roue (101).

14. Véhicule (100) selon la revendication 10, dans lequel l'appareil de freinage latéral de roue (101) est configuré pour recevoir le premier signal de frein par l'intermédiaire d'un premier bus, et l'appareil de freinage latéral de roue (101) est configuré pour recevoir le second signal de frein par l'intermédiaire d'un second bus, dans lequel l'unité de commande de frein (103) est configurée pour :
envoyer un signal de demande de désactivation externe au système de conduite automatisée (102) et envoyer le second signal de frein à l'appareil de freinage latéral de roue (101), dans lequel le signal de demande de désactivation externe indique au système de conduite automatisée (102) d'arrêter d'envoyer le premier signal de frein à l'appareil de freinage latéral de roue (101).
dans lequel, dans un processus au cours duquel le système de conduite automatisée (102) envoie le premier signal de frein à l'appareil de freinage latéral de roue (101), l'unité de commande de frein (103) est configurée pour envoyer un signal d'état du véhicule au système de conduite automatisée (102).
